# EUROPEAN PATENT APPLICATION

(11) **EP 4 711 433 A1**
(43) Date of publication of application: **18.03.2026**
(21) Application number: 25201979.9
(22) Date of filing: 12.09.2025
(51) Int. Cl.: C09K 5/04, B60H 1/00, H01M 10/625

(54) **REFRIGERANT FOR THERMAL MANAGEMENT OF VEHICLE BATTERY, AND METHOD AND APPARATUS FOR THERMAL MANAGEMENT THEREOF BASED ON THE REFRIGERANT**

(30) Priority: 13.09.2024 KR 20240125637
(71) Applicant: SK Innovation Co., Ltd., Seoul 03188 (KR); SK Enmove Co., Ltd., Seoul 03188 (KR)
(72) Inventor: NOH, Ji Seong, 34124 Daejeon (KR); LEE, Su Jin, 34124 Daejeon (KR)
(74) Representative: Prüfer & Partner mbB Patentanwälte · Rechtsanwälte

(57) **Abstract**

Disclosed are a use of a refrigerant, a method, and an apparatus for thermal management of a vehicle battery. The refrigerant comprises at least one of a natural refrigerant; a hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant, and can be used for thermal management of the vehicle battery by controlling a temperature of said vehicle battery.

## Description

### Technical Field

The present disclosure relates to a use of a refrigerant as well as to a method and an apparatus for thermal management of a vehicle battery.

### Technical Considerations

In a vehicle, particularly an electric vehicle (EV), the battery directly affects performance aspects such as acceleration and lifespan. If the battery temperature rises, internal chemical reactions are accelerated, which can cause performance degradation due to increased internal resistance or shorten the lifespan of the battery.

Therefore, preventing performance degradation and maintaining the efficiency of the battery is essential for enhancing the overall performance of an EV. Accordingly, the battery cooling system plays a crucial role in electric vehicles.

Among the state-of-the-art cooling methods for EV batteries, a liquid cooling method is predominantly used. This method involves circulating a coolant or a specialized cooling fluid through a battery pack to efficiently transfer and dissipate heat. However, an issue may arise where the weight of such a system leads to a reduction in the performance of the electric vehicle.

### SUMMARY

Embodiments of the present disclosure provide a use of a refrigerant as well as a method and an apparatus for effectively performing thermal management of a vehicle battery.

Problems to be solved through various embodiments are not limited to the above-described problems, and other problems not described above will be clearly understood by those skilled in the art from the following description.

In a general aspect, the present disclosure relates to a use of a refrigerant comprising at least one selected from the group consisting of: a natural refrigerant; a hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant for thermal management of a vehicle battery by controlling a temperature of the vehicle battery.

In some embodiments, the natural refrigerant may include at least one selected from the group consisting of: methane (R-50), ammonia (R-717), carbon dioxide (R-744), ethane (R-170), and propane (R-290).

In some embodiments, the hydrofluorocarbon (HFC)-based refrigerant may include at least one selected from the group consisting of: difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc).

In some embodiments, the hydrofluoroolefin (HFO)-based refrigerant may include at least one selected from the group consisting of: 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye).

In some embodiments, the hydrochlorofluorocarbon (HCFC)-based refrigerant may include at least one selected from the group consisting of: chlorodifluoromethane (R-22), chlorotetrafluoroethane (R-124), and 1-chloro-1,1-difluoroethane (R-142b).

In some embodiments, the hydrocarbon-based refrigerant that is not a natural refrigerant may include at least one selected from the group consisting of: propylene (R-1270), isobutane (R-600a), dimethyl ether, isopentane, and pentane.

In some embodiments, the halon or the perfluorocarbon (PFC)-based refrigerant may include at least one selected from the group consisting of: trifluoroiodomethane (R-13I1), octafluoropropane (R-218), and octafluorocyclobutane (RC318).

According to another general aspect of the present disclosure, there is provided a method for thermal management of a vehicle battery, wherein a temperature of the vehicle battery is controlled based on a refrigerant, the refrigerant comprising at least one selected from the group consisting of: a natural refrigerant; a hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant.

In some embodiments, the refrigerant may include any one specific refrigerant material specified above.

In some embodiments, the method may include: measuring, by at least one temperature measuring sensor, at a predetermined time interval, a temperature of a coolant for cooling the vehicle battery, after the coolant is heat-exchanged with the refrigerant of an air conditioning system; receiving, by a processor, information on the temperature of the coolant for cooling the vehicle battery measured by the at least one temperature measuring sensor, after the coolant is heat-exchanged with the refrigerant of the air conditioning system; operating, by the processor, an electronic device for cooling to perform cooling of the coolant when the temperature of the coolant exceeds a predetermined first reference temperature; and supplying, by the processor, the refrigerant to a bypass pipe directly connected to the vehicle battery when the temperature of the coolant, measured after performing cooling of the vehicle battery based on the cooling of the coolant, exceeds a second reference temperature. Optionally, the coolant may be configured to include at least a part of the composition of the refrigerant charged in the air conditioning system. In some embodiments, the refrigerant may include any one specific refrigerant material specified above, and the coolant may include any conventional coolant.

In some embodiments, the method may further include: stopping operation of the electronic device for cooling, and shutting off a flow of the refrigerant in the bypass pipe, when the temperature of the coolant, measured after supplying the refrigerant to the bypass pipe, falls to or below a third reference temperature, by the processor.

In some embodiments, the first reference temperature may be less than or equal to the second reference temperature, and the third reference temperature may be less than the first reference temperature.

According to another general aspect of the present disclosure, there is provided an apparatus for thermal management of a vehicle battery, the apparatus including: a battery cooling system comprising a coolant pipe configured to circulate a coolant through the battery; an air conditioning system comprising a refrigerant pipe that is arranged so that a refrigerant can circulate therethrough to control air conditioning of the vehicle, and a bypass pipe that is arranged to selectively supply the refrigerant to the vehicle battery; and a battery chiller configured to perform heat exchange between the coolant pipe and the refrigerant pipe, wherein the refrigerant includes at least one selected from the group consisting of: a natural refrigerant; a hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant.

In some embodiments, the natural refrigerant may include at least one selected from the group consisting of: methane (R-50), ammonia (R-717), carbon dioxide (R-744), ethane (R-170), and propane (R-290).

In some embodiments, the hydrofluorocarbon (HFC)-based refrigerant may include at least one selected from the group consisting of: difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc).

In some embodiments, the hydrofluoroolefin (HFO)-based refrigerant may include at least one selected from the group consisting of: 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye).

In some embodiments, the hydrochlorofluorocarbon (HCFC)-based refrigerant may include at least one selected from the group consisting of: chlorodifluoromethane (R-22), chlorotetrafluoroethane (R-124), and 1-chloro-1,1-difluoroethane (R-142b).

In some embodiments, the hydrocarbon-based refrigerant that is not a natural refrigerant may include at least one selected from the group consisting of: propylene (R-1270), isobutane (R-600a), dimethyl ether, isopentane, and pentane.

In some embodiments, the halon or the perfluorocarbon (PFC)-based refrigerant may include at least one selected from the group consisting of: trifluoroiodomethane (R-13I1), octafluoropropane (R-218), and octafluorocyclobutane (RC318).

In some embodiments, the apparatus may further include: a processor configured to: receive, at a predetermined time interval, information on a temperature, measured via at least one temperature measurement sensor, of the coolant after the coolant is heat-exchanged with the refrigerant; operate an electronic device for cooling to perform cooling of the coolant when the temperature of the coolant exceeds a predetermined first reference temperature; and supply the refrigerant to the bypass pipe when the temperature of the coolant, measured after performing cooling of the vehicle battery based on the cooling of the coolant, exceeds a second reference temperature.

In some embodiments, the processor may be further configured to: stop operation of the electronic device for cooling, and shut off a flow of the refrigerant in the bypass pipe, when the temperature of the coolant, measured after supplying the refrigerant to the bypass pipe, falls to or below a third reference temperature.

In some embodiments, the first reference temperature may be configured to be less than or equal to the second reference temperature, and the third reference temperature may be configured to be less than the first reference temperature.

In some non-limiting embodiments, by using the air conditioning system of the vehicle for battery cooling, the disclosed use, method and/or apparatus can reduce the volume and weight of the battery cooling system while maintaining high-efficiency battery cooling performance.

In some non-limiting embodiments, the disclosed use, method and/or system may be applied not only to control a cabin temperature of the vehicle, but also to control the battery temperature during fast charging or during vehicle startup in winter.

In some non-limiting embodiments, the method and system for air conditioning control of an electric vehicle can improve heat exchange efficiency by selectively controlling which of a plurality of pipes the refrigerant circulates through, based on the temperature difference between a target temperature and the cabin temperature of the vehicle.

In some non-limiting embodiments, the disclosed use, method and/or system can achieve rapid cooling or heating by variably controlling the number of pipes, from among the plurality of pipes, through which the refrigerant circulates to perform cooling or heating of the vehicle, thereby securing sufficient heat exchange performance of the refrigerant.

### BRIEF DESCRIPTION OF THE DRAWINGS

The above and other objects, features and other advantages of the embodiments of the present disclosure will be more clearly understood from the following detailed description taken in conjunction with the accompanying drawings, in which:
FIG. 1 is a diagram schematically illustrating a configuration of an apparatus for controlling a battery temperature of a vehicle, according to an embodiment.
FIG. 2 is a diagram schematically illustrating detailed components of a thermal management system in an apparatus for battery temperature control, according to an embodiment of the present disclosure.
FIGS. 3 and 4 are diagrams schematically illustrating operations of the thermal management system, according to various embodiments of the present disclosure.
FIG. 5 is a flowchart schematically illustrating an operation of the apparatus for cooling a battery temperature, according to an embodiment of the present disclosure.
FIG. 6 is a flowchart schematically illustrating an operation of the apparatus after performing cooling of a battery temperature, according to an embodiment of the present disclosure.

### DETAILED DESCRIPTION

Hereinafter, embodiments of the present disclosure will be described in detail with reference to the accompanying drawings. However, since various changes may be made in the embodiments, the scope of the present disclosure is not limited or restricted by these embodiments. It should be understood that all modifications, equivalents, and alternatives for the embodiments are included in the scope of the present disclosure. For example, it is to be understood that the embodiments of the present disclosure include various alternative variations and step sequences, except where expressly specified to the contrary. It is also to be understood that the specific devices and processes illustrated in the attached drawings, and described in the following detailed description, are simply illustrative and describe non-limiting embodiments of the disclosed subject matter. Hence, specific dimensions and other physical characteristics related to the embodiments disclosed herein are not to be considered as limiting.

No aspect, component, element, structure, act, step, function, instruction etc. used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, etc.) and may be used interchangeably with "one or more" or "at least one." Where only one item is intended, the term "one" or similar language is used. Also, as used herein, the terms "comprise", "comprises", "comprising", "include", "includes", "including", "has," "have," "having," etc. are intended to be open-ended terms. Further, the phrase "based on" is intended to mean "based at least partially on" unless explicitly stated otherwise. **In** addition, reference to an action being "based on" a condition may refer to the action being "in response to" the condition. For example, the phrases "based on" and "in response to" may, in some non-limiting embodiments, refer to a condition for automatically triggering an action (e.g., a specific operation of an electronic device, such as a computing device, a processor, etc.).

It will be understood that when a component is described to as being "connected," "combined" or "coupled" to another component, the component may be directly connected or coupled to the another component, or it may be "connected," "combined" or "coupled" to the other component by an intervening other component that may be present.

Further, in describing the components of the embodiment, the meaning of "or" may mean each of the components, may mean two or more of the components, or may mean all of the components. For example, it should be understood that the expressions "a, b or c" represent any one of "a," "b," "c, " "a and b," "a and c," "b and c," and "a, b and c."

Components comprised in one embodiment and components comprising common functions will be described using the same names in other embodiments. The description given in one embodiment may be applied to other embodiments, and therefore will not be described in detail within the overlapping range, unless there is a description opposite thereto.

The device and/or 'data' processed by the device may be expressed in terms of 'information". Here, the information may be used as a concept comprising the data.

Hereinafter, a use of a refrigerant as well as a method and an apparatus for thermal management of a battery of an automobile (hereinafter, a vehicle) will be described. Here, the automobile may be an electric vehicle that drives wheels using a motor, and may include a vehicle that drives wheels based on electric power stored in a rechargeable battery, such as a lithium-ion battery.

Hereinafter, a use of a refrigerant as well as a method and an apparatus for thermal management of a battery in a vehicle will be described. However, the present disclosure is not limited thereto, and the use, the method, and the apparatus for battery thermal management may also be applied to an internal combustion engine vehicle (e.g., for a battery or an engine thereof).

According to various embodiments of the present disclosure, the thermal management of a vehicle battery may be performed through a battery cooling system 141 configured for cooling the battery, and a heating, ventilation, and air conditioning (HVAC) system, i.e., an air conditioning system 143, for controlling a cabin temperature of the vehicle.

Hereinafter, various embodiments of the present disclosure will be described with reference to various drawings.

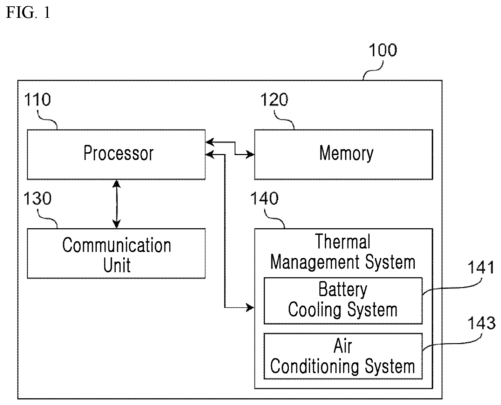

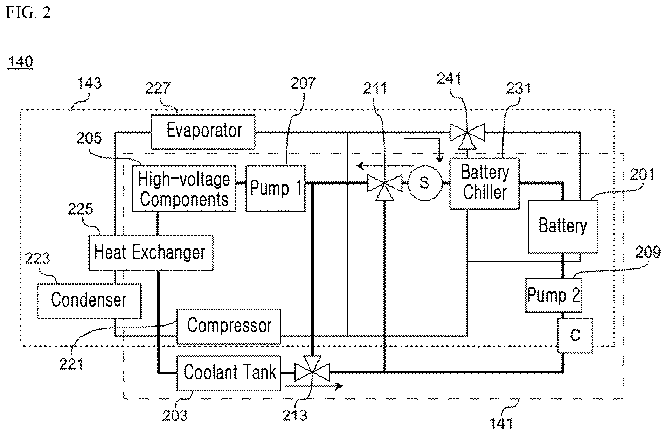

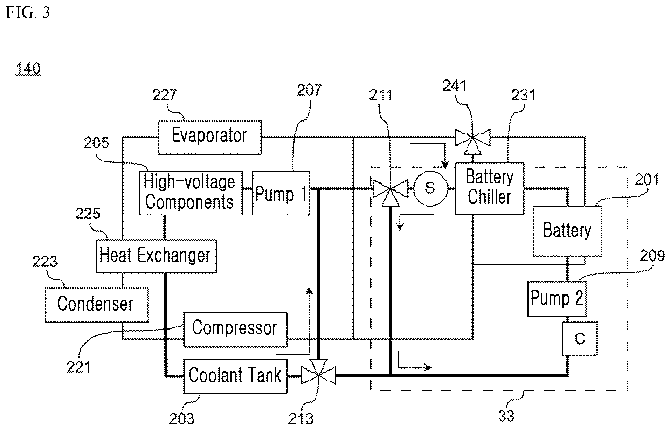

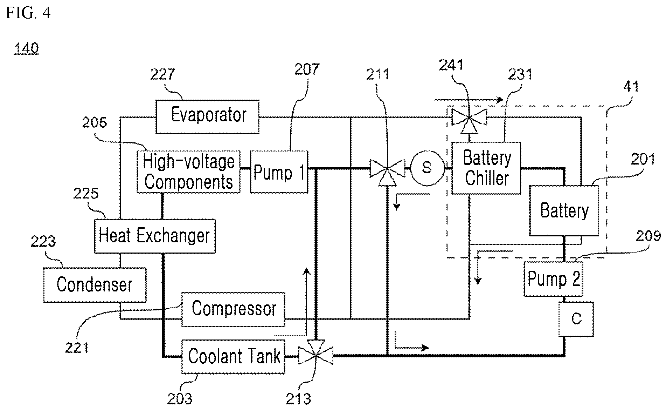

FIG. 1 is a diagram schematically illustrating a configuration of an apparatus for controlling a battery temperature of a vehicle, according to an embodiment. FIG. 2 is a diagram schematically illustrating detailed components of a thermal management system in the apparatus for battery temperature control, according to an embodiment of the present disclosure. FIGS. 3 and 4 are diagrams schematically illustrating operations of the thermal management system, according to various embodiments of the present disclosure.

First, referring to FIG. 1, an apparatus 100 for controlling a battery temperature of a vehicle may include a thermal management system 140 for battery temperature control, a processor 110 for controlling an operation of the thermal management system 140, a memory 120 for storing data for the operation of the processor 110, and a communication unit 130 for communication of the apparatus 100.

Here, the thermal management system 140 may be configured to include a battery cooling system 141 for cooling the battery and an air conditioning system 143 for controlling a vehicle cabin temperature.

Here, the apparatus 100 may be a vehicle including the thermal management system 140 or an apparatus configured to control an operation of the thermal management system 140 in a vehicle.

The processor 110 may include at least one processor and may process various data for an operation of the apparatus 100 through at least one program (e.g., an application, a tool, a plug-in, software, etc.). The processor 110 may receive and/or read data or information related to a temperature of a coolant. More specifically, the processor 110 may receive and/or read information on the temperature of the coolant, measured via the at least one temperature measuring sensor S after the coolant is heat-exchanged with the refrigerant.

The processor 110 may control an operation or function of components included in (or connected to) the apparatus 100 (e.g., the memory 120, the communication unit 130, or the thermal management system 140), and to this end, may transmit and receive data to and from the components through the communication unit 130.

The memory 120 may include a volatile memory, a non-volatile memory, or a computer-readable recording medium. In this case, the computer-readable recording medium may store a computer program for the apparatus 100 to perform an operation based on various embodiments.

For example, the memory 120 may store various data transmitted/received or processed by at least one component of the apparatus 100 (e.g., the processor 110 or the communication unit 130). The data may include, for example, a program for processing a control command, data processed through the program, or related input data and output data.

According to an embodiment, the memory 120 may include a program for controlling an operation of the thermal management system 140.

In addition, the memory 120 may include an artificial intelligence algorithm based on at least some of a neural network algorithm, a blockchain algorithm, a deep learning algorithm, a regression analysis algorithm, and related mechanisms, operators, language models, and big data for processing a control command.

The communication unit 130 may support establishing a wired communication channel, establishing a wireless communication channel, and performing communication through the established communication channel between internal components of the apparatus 100, and/or between the apparatus 100 and at least one other device (e.g., a user device or a server).

The thermal management system 140 may be configured to manage a temperature of a heat source of the vehicle or a cabin of the vehicle. According to an embodiment, the thermal management system 140 may be configured to include a battery cooling system 141 for controlling a temperature of a vehicle battery (e.g., cooling the battery) and an air conditioning system 143 for controlling a cabin temperature of the vehicle.

Referring to FIG. 2 in more detail, the battery cooling system 141 includes at least some battery cooling system components from among a battery 201, a coolant tank 203, at least one high-voltage component 205, a first pump 207 (indicated as pump 1 in the figure), a second pump 209 (indicated as pump 2 in the figure), an electronic device for cooling C for cooling a coolant, and a heat exchanger 225, and may be configured to include a coolant pipe connecting the battery cooling system components and a coolant flowing through the coolant pipe.

Here, the battery 201 may be configured to include at least one battery cell. In addition, in describing the following embodiments, the battery 201 may refer to a battery cell, a battery module, a battery pack, or a configuration including two or more thereof.

The high-voltage component 205 may be configured to include at least one component capable of generating heat, such as a motor, an inverter, a charger, a converter (e.g., a DC-DC converter, etc.).

In addition, the battery cooling system 141 may be configured to further include a battery chiller 231 for heat exchange with the air conditioning system 143.

Here, a first path coolant pipe may be formed such that the coolant flows from the coolant tank 203, passes through the first pump 207, the high-voltage component 205, and the heat exchanger 225, and returns to the coolant tank 203. In addition, a second path coolant pipe may be formed in parallel with the first path coolant pipe such that the coolant flows from the coolant tank 203, passes through the second pump 209, the battery 201, and the battery chiller 231, and flows to the first pump 207.

Here, at least one valve (e.g., valve 211, valve 213) for controlling a coolant flow (e.g., a coolant flow direction) between the first path coolant pipe and the second path coolant pipe may be connected to the coolant pipe. Here, a valve (e.g., valve 211 or valve 213) connected to the coolant pipe may operate based on control of the processor 110.

Here, the valve 211 or 213, as a valve having one inlet and two outlets, may be configured to include a multiport valve or a three-way valve.

The valve 211 or 213 may perform a function of allowing a fluid (e.g., a coolant) entering through the one inlet to flow to at least one of the two outlets, or blocking the fluid from flowing, according to control of the processor 110.

Here, the second path coolant pipe may form a circulating second path coolant pipe 33 by controlling, via the valve 211, the coolant discharged from the battery chiller 231 to flow to the second pump 209.

Here, the coolant pipe connected to the battery 201 may be configured such that at least a part thereof is attached to an outside of a housing of the battery 201 (or a battery cell inside the battery 201), passes through the housing, and/or is disposed inside the housing for battery cooling.

In addition, in the piping of the battery cooling system 141, at least one electronic device for cooling C for cooling the coolant may be disposed in an inlet-side pipe of the battery 201.

Referring to FIG. 2, the electronic device for cooling C is illustrated as being disposed in an inlet coolant pipe of the second pump 209, but is not limited thereto, and may be disposed in an inlet pipe of the battery 201 (e.g., between the battery 201 and the second pump 209).

Here, the electronic device for cooling C may be configured to include a Peltier device that uses the Peltier effect, such as a thermoelectric cooler (TEC) or semiconductor cooling devices, Magnetocaloric Cooling Devices, Electrohydrodynamic (EHD) cooling devices, or Superconducting Cooling Devices.

In this case, the electronic device for cooling C may be disposed such that its cool side is in contact with an outer surface of the pipe or in contact with the coolant.

Here, when the cool side of the electronic device for cooling C is configured to be in contact with the coolant, it may be configured by cutting a part of a side surface of the pipe where the cool side is to be disposed, and then disposing and sealing the cool side of the electronic device for cooling C.

In addition, the battery cooling system 141 may be configured to include at least one temperature measurement sensor S for measuring the temperature of the coolant that has passed through the battery chiller 231. In some embodiments, the at least one temperature measurement sensor S may comprise two or more sensors, such as a combination of a first sensor S1 and a second sensor S2, wherein the second sensor S2 may serve as a backup sensor to introduce redundancy, increased accuracy and/or enables fault diagnosis in the entire system.

The heat exchanger 225 of the battery cooling system 141 may be configured to be shared with the air conditioning system 143. To this end, the heat exchanger 225 may be configured to include at least one radiator.

Based on this, the air conditioning system 143 includes at least some air conditioning system components from among a compressor 221, a condenser 223, a heat exchanger 225, and an evaporator 227, and may be configured to include a refrigerant pipe connecting the air conditioning system components and a refrigerant flowing through the refrigerant pipe.

In addition, the air conditioning system 143 may be configured to further include the battery chiller 231 for heat exchange with the battery cooling system 141. Here, the air conditioning system 143 may be configured to share the battery chiller 231 with the battery cooling system 141.

Here, a first path refrigerant pipe may be formed such that the refrigerant flows from the compressor 221, passes through the condenser 223, the heat exchanger 225, and the evaporator 227, and returns to the compressor 221. In addition, a second path refrigerant pipe (auxiliary pipe) may be connected in parallel such that the refrigerant flows from the evaporator 227, passes through the battery chiller 231, and flows to the compressor 221. In addition, a third path refrigerant pipe (bypass pipe) may be connected in parallel to the second refrigerant path such that the refrigerant flows from the evaporator 227, passes through the battery 201, and flows to the compressor 221.

Here, at least one valve (e.g., valve 241) for controlling a refrigerant flow of the third refrigerant path may be connected to the refrigerant pipe. Here, the valve 241 connected to the refrigerant pipe may operate based on control of the processor 110.

Here, regarding the refrigerant filled in the refrigerant pipe, in exemplary embodiments, at least one of various refrigerants may be included, such as a natural refrigerant, a hydrofluorocarbon (HFC)-based refrigerant, a hydrofluoroolefin (HFO)-based refrigerant, a hydrochlorofluorocarbon (HCFC)-based refrigerant, a hydrocarbon-based refrigerant that is not a natural refrigerant, and a halon or a perfluorocarbon (PFC)-based refrigerant. These may be used alone or in a combination of two or more thereof.

Here, the natural refrigerant may include methane (R-50), ammonia (R-717), carbon dioxide (R-744), ethane (R-170), propane (R-290), and other common natural refrigerants such as water (R-718), or a mixture thereof.

The hydrofluorocarbon (HFC)-based refrigerant may include difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), 1,1,1,3,3-pentafluorobutane (R-365mfc), and other common HFC-based refrigerants, or a mixture thereof..

The hydrofluoroolefin (HFO)-based refrigerant may include 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), 1,2,3,3,3-pentafluoropropene (R-1225ye), and other common HFO-based refrigerants, or a mixture thereof.

The hydrochlorofluorocarbon (HCFC)-based refrigerant may include chlorodifluoromethane (R-22), chlorotetrafluoroethane (R-124), 1-chloro-1,1-difluoroethane (R-142b), and other HCFC-based refrigerants, or a mixture thereof.

The hydrocarbon-based refrigerant that is not a natural refrigerant may include propylene (R-1270), isobutane (R-600a), dimethyl ether, isopentane, pentane, and other known refrigerant compounds such as methyl formate (R-611), or a mixture thereof.

The halon or perfluorocarbon (PFC)-based refrigerant may include trifluoroiodomethane (R-13I1), octafluoropropane (R-218), octafluorocyclobutane (RC318), and other common halon or PFC-based refrigerants, or a mixture thereof.

Here, the coolant charged in the coolant pipe of the battery cooling system 141 may, as described above, include at least a part of the composition of the refrigerant charged in the refrigerant pipe of the air conditioning system 143.

Here, the valve 241, as a valve having one inlet and two outlets, may be configured to include a multiport valve or a three-way valve.

The valve 241 may perform a function of allowing a fluid (e.g., a refrigerant) entering through the one inlet to flow to at least one of the two outlets, or blocking the fluid from flowing, according to control of the processor 110.

According to the above description, the thermal management system 140 may be configured such that heat exchange is performed between the coolant pipe of the battery cooling system 141 (e.g., the second path coolant pipe) and the refrigerant pipe of the air conditioning system 143 (e.g., the second path refrigerant pipe) via the battery chiller 231.

To be more specific, the battery chiller 231 may be configured to be disposed between the battery 201 and the valve 211 of the battery cooling system 141, and between the compressor 221 and the evaporator 227 of the air conditioning system 143.

The battery chiller 231 may be configured such that at least a part of the second path refrigerant pipe (auxiliary pipe) of the air conditioning system 143 and at least a part of the second path coolant pipe of the battery cooling system 141 face or cross each other.

In this case, the battery chiller 231 includes at least one heat exchanger (e.g., a radiator), and the refrigerant flowing through the second path refrigerant pipe of the air conditioning system 143 via the heat exchanger may be configured to absorb heat from the coolant flowing through the second path coolant pipe of the battery cooling system 141.

To this end, the second path coolant pipe of the battery cooling system 141 and the second path refrigerant pipe of the air conditioning system 143 may be configured to perform heat exchange via the heat exchanger of the battery chiller 231.

Here, the refrigerant pipe connected to the battery 201 may be configured such that at least a part thereof is attached to an outside of a housing of the battery 201 (or a battery cell inside the battery 201), passes through the housing, and/or is disposed inside the housing for battery cooling.

Hereinafter, an operation of controlling a moving path of a coolant by controlling at least one valve (valve 211, valve 213, and/or valve 241) in the battery cooling system 141 and the air conditioning system 143 will be described with reference to FIGS. 2 to 4.

First, referring to FIG. 2, the processor 110 may control a valve (valve 211 and/or valve 213) such that the coolant flows to a first path coolant pipe and a second path coolant pipe in the battery cooling system 141.

To be more specific, the processor 110 may control the valve 213 such that the coolant discharged from the coolant tank 203 flows in a direction of the first pump 207 and a direction of the second pump 209, and may control the valve 211 such that the coolant discharged from the battery chiller 231 flows in the direction of the first pump 207.

In this case, the processor 110 may control the valve 211 to block a coolant flow from the valve 211 in a direction of the second pump 209.

In addition, the processor 110 may control the valve 241 such that the refrigerant flows to a second refrigerant path pipe in the air conditioning system 143.

To be more specific, the processor 110 may control the valve 241 such that the refrigerant discharged from the evaporator 227 passes through the battery chiller 231 and flows in a direction of the compressor 221.

In this case, the processor 110 may control the valve 241 to block a refrigerant flow from the valve 241 in a direction of the battery 201 (i.e., a refrigerant flow to a third path refrigerant pipe).

Hereinafter, referring to FIG. 3, the processor 110 may control a valve (valve 211 and/or valve 213) such that the coolant circulates in a circulating second path coolant pipe 33 of the battery cooling system 141.

To be more specific, the processor 110 may control the valve 211 and/or the valve 213 such that the coolant that has passed through the second pump 209, the battery 201, and the battery chiller 231 flows back to the second pump 209. In this case, the processor 110 may control the valve 211 to block a coolant flow from the battery chiller 231 in the direction of the first pump 207.

Hereinafter, referring to FIG. 4, the processor 110 may control the valve 241 such that the refrigerant flows through a third path refrigerant pipe of the air conditioning system 143.

To be more specific, the processor 110 may control the valve 241 such that the refrigerant discharged from the evaporator 227 flows in the direction of the battery 201. In this case, the processor 110 may control the valve 241 to block a refrigerant flow in a direction of the battery chiller 231.

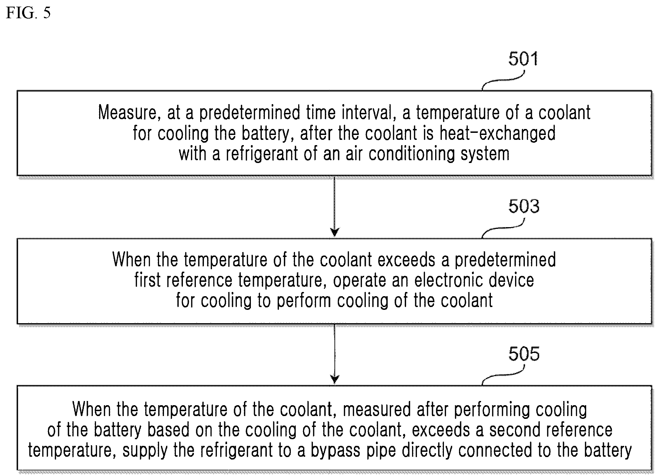

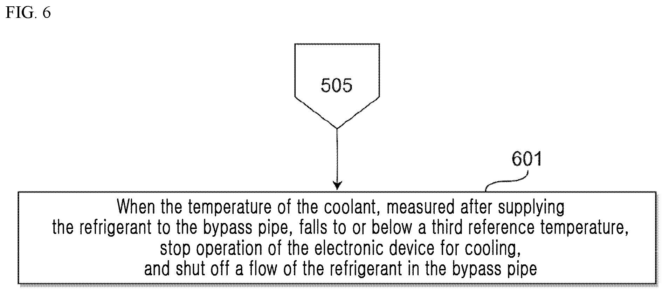

A method of performing battery thermal management based on the thermal management system 140 of the apparatus 100 configured as described above will be described in detail below with reference to FIGS. 5 and 6. FIG. 5 is a flowchart schematically illustrating an operation of the apparatus for cooling a battery temperature, according to an embodiment of the present disclosure. FIG. 6 is a flowchart schematically illustrating an operation of the apparatus after performing cooling of a battery temperature, according to an embodiment of the present disclosure.

In step 501, the at least one temperature measurement sensor S may measure, at a predetermined time interval, a temperature of the coolant for cooling the vehicle battery 201 after the coolant is heat-exchanged with the refrigerant of the air conditioning system. The processor 110 may receive and/or read information on the temperature, determined by the at least one temperature measurement sensor S at a predetermined time interval, of the coolant for cooling the battery after the coolant is heat-exchanged with the refrigerant of the air conditioning system.

For example, when the processor 110 confirms that the vehicle is in a powered-on state (or a started state), the processor 110 may receive information on the temperature of the coolant after it has passed through the battery chiller 231, determined via the at least one temperature measurement sensor S, at a predetermined time interval or in real time.

To be more specific, the processor 110 may receive or read, at a predetermined time interval or in real time, information on the temperature of the coolant after it has been heat-exchanged (e.g., cooled) by passing through the battery chiller 231.

However, the present disclosure is not limited thereto, and the processor 110 may receive information on the temperature of the coolant, determined via the at least one temperature sensor S, after the coolant has passed through the battery chiller 231 at a predetermined time interval or in real time when the temperature of the battery 201 (or at least one battery included in the battery, hereinafter referred to as battery 201) exceeds a predetermined sensing start temperature.

At a time, when the measurement of the coolant temperature via the at least one temperature measurement sensor S is started, the thermal management system 140 may be in a state of circulating the coolant and the refrigerant as described with reference to FIG. 2.

According to an embodiment, in step 501, the processor 110 may control a valve (valve 211 and/or valve 213) such that the coolant flows to a first path coolant pipe and a second path coolant pipe in the battery cooling system 141.

To be more specific, the processor 110 may control the valve 213 such that the coolant discharged from the coolant tank 203 flows in a direction of the first pump 207 and a direction of the second pump 209, and may control the valve 211 such that the coolant discharged from the battery chiller 231 flows in the direction of the first pump 207.

In this case, the coolant that has flowed into the first pump 207 may pass through the high-voltage component 205 and the heat exchanger 225 and flow into the coolant tank 203.

In addition, in step 501, the processor 110 may control the valve 241 such that the refrigerant circulates to a first path refrigerant pipe and a second path refrigerant pipe in the air conditioning system 141. In this case, the operation of the air conditioning system 143 is an operation for cooling the battery 201 of the vehicle, and the processor 110 may control the air conditioning system 143 to operate in a cooling mode, but may also control the air conditioning system 143 such that the cooled air does not flow into the interior of the vehicle.

However, when a target temperature (e.g., a target temperature for the cooling mode) is set according to a user input (e.g., from a vehicle occupant), the processor 110 may allow the cooled air to flow into the interior of the vehicle according to the cooling mode so that the cabin temperature of the vehicle reaches the target temperature.

Here, when the temperature of the battery 201 is equal to or less than a predetermined initial limit temperature at a time point when temperature measurement for the vehicle battery 201 is started, the processor 110 may control the valve 213 such that the coolant flows to the first pump 207. Here, the initial limit temperature may be set to a temperature higher than the sensing start temperature.

However, when the temperature of the battery 201 exceeds the predetermined initial limit temperature at the time point when temperature measurement for the vehicle battery 201 is started, or when an amount of temperature change (or an average value of the amount of temperature change) within a predetermined time (e.g., 30 seconds) from the start of the temperature measurement for the vehicle battery 201 exceeds a predetermined value, the processor 110 may control the valve 213 to reduce or block the amount of coolant flowing to the first pump 207.

Here, when the processor 110 controls the valve 213 to reduce the amount of coolant flowing to the first pump 207, the amount of coolant flowing to the first pump 207 may be proportionally reduced as the amount of temperature change (or the average value of the amount of temperature change) increases. To this end, the memory 120 may store a data table in which a coolant flow rate to the first pump 207 is predetermined according to the amount of temperature change (or the average value of the amount of temperature change).

Here, the time of 30 seconds is a value for explaining an embodiment for calculating the amount of temperature change (or the average value of the amount of temperature change) of the battery, and may be set to various time values such as 40 seconds, 45 seconds, 1 minute, and similar values in the range of several seconds to tens of seconds, to several minutes, and up to tens of minutes.

In step 503, when the temperature of the coolant heat-exchanged via the battery chiller 231 exceeds a predetermined first reference temperature, the processor 110 may operate the electronic device for cooling to perform cooling of the coolant. Here, the first reference temperature may be predetermined to a temperature higher than the initial limit temperature.

To this end, after step 501, the processor 110 may determine whether the measured temperature of the coolant that has passed through the battery chiller 231 exceeds the first reference temperature.

In this case, when the measured coolant temperature is equal to or less than the first reference temperature, the processor 110 may repeatedly perform an operation of determining whether a subsequently measured coolant temperature exceeds the first reference temperature.

On the other hand, when the measured coolant temperature exceeds the first reference temperature, the processor 110 may operate the electronic device for cooling C to perform cooling of the coolant.

Here, when the measured coolant temperature exceeds the first reference temperature, the processor 110 may control at least one valve (valve 211 and/or valve 213) such that the coolant circulates in the circulating second path coolant pipe 33.

To be more specific, the processor 110 may control the valve 211 such that the coolant discharged from the battery chiller 231 flows in a direction of the second pump 209. In this case, the processor 110 may control the valve 211 such that the coolant discharged from the battery chiller 231 does not flow in a direction of the first pump 207.

Through this, the coolant discharged from the battery chiller 231 may pass through the second pump 209 and the battery 201 and flow back into the battery chiller 231.

In this case, if the valve 213 is closed such that the coolant discharged from the coolant tank 203 does not flow in the direction of the first pump 207, the processor 110 may control the valve 213 such that the coolant discharged from the coolant tank 203 flows in the direction of the first pump 207.

Here, the processor 110 may maintain the state of the valve 241, in which the refrigerant circulates to the first path refrigerant pipe and the second path refrigerant pipe of the air conditioning system 141, similar to step 501.

As described above, the coolant circulating in the circulating second path coolant pipe 33 is primarily cooled via the battery chiller 231 and then secondarily cooled via the electronic device for cooling C, thereby rapidly lowering the temperature of the battery 201.

In step 505, when the temperature of the coolant heat-exchanged at the battery chiller 231 exceeds a second reference temperature after performing cooling of the battery based on the cooling of the coolant via the electronic device for cooling C, the processor 110 may supply the refrigerant to a bypass pipe directly connected to the battery. Here, the second reference temperature may be predetermined to a temperature higher than the first reference temperature.

To this end, after step 503, the processor 110 may determine whether the measured temperature of the coolant that has passed through the battery chiller 231 exceeds the second reference temperature.

In this case, when the measured coolant temperature is equal to or less than the second reference temperature, the processor 110 may repeatedly perform an operation of determining whether a subsequently measured coolant temperature exceeds the second reference temperature.

On the other hand, when the measured coolant temperature exceeds the second reference temperature, the processor 110 may control the valve 241 such that the refrigerant flows to the bypass pipe (e.g., the third path refrigerant pipe).

In this case, the processor 110 may control the valve 241 such that the refrigerant discharged from the evaporator 227 does not flow in a direction of the battery chiller 231.

Through this, the refrigerant of the air conditioning system 143 flows into the battery 201, and the temperature of the battery 201 can be rapidly cooled using the refrigerant of the air conditioning system 143.

When the processor 110 performs the operation of step 505, it may end the embodiment of FIG. 5.

Hereinafter, an operation after performing battery cooling using the battery cooling system 141 and the air conditioning system 143 will be described with reference to FIG. 6.

Hereinafter, step 601 may be described as an operation performed after the operation of step 505 of FIG. 5.

In step 601, when the temperature of the coolant, measured after supplying the refrigerant to the bypass pipe, falls to or below a third reference temperature, the processor 110 may stop the operation of the electronic device for cooling and shut off the flow of the refrigerant in the bypass pipe.

Here, the third reference temperature may be predetermined to a temperature lower than the first reference temperature. According to another embodiment, the third reference temperature may be predetermined to a value between a temperature exceeding the initial limit temperature and a temperature lower than the first reference temperature.

To this end, after step 505, the processor 110 may determine whether the measured temperature of the coolant that has passed through the battery chiller 231 exceeds the third reference temperature.

In this case, at the time of performing step 505, the refrigerant flowing in the direction of the battery chiller 231 is blocked by the control of the valve 241, and thus, the coolant discharged from the battery chiller 231 may be in a state where heat exchange has not been performed.

In this regard, when the coolant temperature measured after passing through the battery chiller 231 exceeds the third reference temperature, the processor 110 may repeatedly perform an operation of determining whether a subsequently measured coolant temperature exceeds the third reference temperature.

On the other hand, when the measured coolant temperature is equal to or less than the third reference temperature, the processor 110 may terminate the operation of the electronic device for cooling C and shut off the refrigerant flow to the bypass pipe (e.g., the third path refrigerant pipe).

To be more specific, the processor 110 may terminate the operation of the electronic device for cooling C and control at least one valve (e.g., valve 211 and/or valve 213) such that the coolant circulating in the circulating second path coolant pipe 33 is circulated through the first path coolant pipe and the second path coolant pipe.

For example, the processor 110 may control the valve 211 such that the coolant discharged from the battery chiller 231 flows to the first pump 207. In this case, the processor 110 may control the valve 211 to block the coolant discharged from the battery chiller 231 from flowing to the second pump 209 via the circulating second path coolant pipe 33.

In addition, the processor 110 may control the valve 213 such that the coolant discharged from the coolant tank 203 flows to the second pump 209. In this case, the processor 110 may also control the valve 213 such that the coolant discharged from the coolant tank 203 does not flow to the first pump 207.

In addition, the processor 110 may control the valve 241 to block the refrigerant that is discharged from the evaporator 227 and flows to the bypass pipe (the third path refrigerant pipe) (or flows in the direction of the battery 201). In this case, the processor 110 may control the valve 241 such that the refrigerant discharged from the evaporator 227 flows in the direction of the battery chiller 231 (e.g., flows to the second path refrigerant pipe).

When the processor 110 performs the operation of step 601, it may end the embodiment of FIG. 6.

According to the above-described embodiments, the battery chiller 231 is described as being included as a component of the battery cooling system 141 and/or the air conditioning system 143. However, the present disclosure is not limited thereto, and the battery chiller 231 may be included in the apparatus 100 as an independent component separate from the battery cooling system 141 or the air conditioning system 143.

In a preferred embodiment, the apparatus 100 for thermal management of a vehicle battery 201 may comprise a battery cooling system 141 comprising a coolant pipe configured to circulate a coolant through the vehicle battery 201, an air conditioning system 143 comprising a refrigerant pipe that is arranged so that a refrigerant can circulate therethrough to control air conditioning of the vehicle, and a bypass pipe that is arranged to selectively supply the refrigerant to the vehicle battery 201, and a battery chiller 231 configured to perform heat exchange between the coolant pipe and the refrigerant pipe, the refrigerant comprising at least one selected from the group consisting of: a natural refrigerant, a hydrofluorocarbon (HFC)-based refrigerant, a hydrofluoroolefin (HFO)-based refrigerant, a hydrochlorofluorocarbon (HCFC)-based refrigerant, a hydrocarbon-based refrigerant that is not a natural refrigerant, and a halon or a perfluorocarbon (PFC)-based refrigerant, as described in the corresponding sections above. The apparatus may further comprise a processor 110, as described in the corresponding section above. In a further embodiment, the first reference temperature of the apparatus may be configured to be less than or equal to the second reference temperature, and the third reference temperature of the apparatus may be configured to be less than the first reference temperature, so that effective cooling of the vehicle battery can be achieved even under highly dynamic and/or demanding driving conditions in extreme environments (e.g., very low or high outside temperatures).

According to the above description, the use of a refrigerant as well as the method and apparatus for thermal management of a vehicle battery based on the present disclosure are not only applied to controlling the temperature of the battery, but also have an effect of reducing the possibility of thermal runaway that may occur during charging.

According to various embodiments, the use, method and apparatus for thermal management of a vehicle battery have an effect of efficiently controlling the heat of the battery while improving the battery efficiency of the vehicle by controlling the battery cooling performance in a stepwise manner.

According to various embodiments, the use, method and apparatus can minimize battery consumption while maintaining an optimal state for the vehicle's cabin environment according to a predicted driving environment in which the actual vehicle is expected to operate.

Although the embodiments have been described with reference to a limited number of drawings, those skilled in the art will be able to apply various technical modifications and variations based on the various embodiments.

For example, appropriate results may be achieved even if the described technologies are performed in a different order from the described method, or if the components of the described system, structure, device, circuit, etc., are combined or joined in a different form from the described method, or are replaced or substituted by other components or equivalents.

Therefore, other implementations, other embodiments, and equivalents to the claims are intended to be included.

## Claims

1. Use of a refrigerant comprising at least one selected from the group consisting of:
a natural refrigerant;
a hydrofluorocarbon (HFC)-based refrigerant;
a hydrofluoroolefin (HFO)-based refrigerant;
a hydrochlorofluorocarbon (HCFC)-based refrigerant;
a hydrocarbon-based refrigerant that is not a natural refrigerant; and
a halon or a perfluorocarbon (PFC)-based refrigerant for thermal management of a vehicle battery (201) by controlling a temperature of the vehicle battery (201).

2. The use of claim 1, wherein the natural refrigerant comprises at least one selected from the group consisting of:
methane (R-50), ammonia (R-717), carbon dioxide (R-744), ethane (R-170), and propane (R-290).

3. The use of claim 1 or 2, wherein the hydrofluorocarbon (HFC)-based refrigerant comprises at least one selected from the group consisting of:
difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc).

4. The use of any one of claims 1 to 3, wherein the hydrofluoroolefin (HFO)-based refrigerant comprises at least one selected from the group consisting of:
1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye).

5. The use of any one of claims 1 to 4, wherein the hydrochlorofluorocarbon (HCFC)-based refrigerant comprises at least one selected from the group consisting of:
chlorodifluoromethane (R-22), chlorotetrafluoroethane (R-124), and 1-chloro-1,1-difluoroethane (R-142b).

6. The use of any one of claims 1 to 5, wherein the hydrocarbon-based refrigerant that is not a natural refrigerant comprises at least one selected from the group consisting of:
propylene (R-1270), isobutane (R-600a), dimethyl ether, isopentane, and pentane.

7. The use of any one of claims 1 to 6, wherein the halon or the perfluorocarbon (PFC)-based refrigerant comprises at least one selected from the group consisting of:
trifluoroiodomethane (R-13I1), octafluoropropane (R-218), and octafluorocyclobutane (RC318).

8. Method for thermal management of a vehicle battery (201),
wherein a temperature of the vehicle battery (201) is controllable based on a refrigerant, the method comprising:
measuring, by at least one temperature measurement sensor (S), at a predetermined time interval, a temperature of a coolant for cooling the vehicle battery (201), after the coolant is heat-exchanged with the refrigerant of an air conditioning system (143);
receiving, by a processor (110), information on the temperature of the coolant for cooling the vehicle battery (201) measured by the at least one temperature sensor (S), after the coolant is heat-exchanged with the refrigerant of the air conditioning system (143);
operating, by the processor (110), an electronic device for cooling (C) to perform cooling of the coolant when the temperature of the coolant exceeds a predetermined first reference temperature; and
supplying, by the processor (110), the refrigerant to a bypass pipe directly connected to the vehicle battery (201) when the temperature of the coolant, measured after performing cooling of the vehicle battery (201) based on the cooling of the coolant, exceeds a second reference temperature,
wherein the refrigerant includes at least one selected from the group consisting of:
a natural refrigerant;
a hydrofluorocarbon (HFC)-based refrigerant;
a hydrofluoroolefin (HFO)-based refrigerant;
a hydrochlorofluorocarbon (HCFC)-based refrigerant;
a hydrocarbon-based refrigerant that is not a natural refrigerant; and
a halon or a perfluorocarbon (PFC)-based refrigerant,
optionally wherein the coolant is configured to include at least a part of the composition of the refrigerant charged in the air conditioning system (143).

9. The method of claim 8, further comprising:
stopping operation of the electronic device for cooling (C), and shutting off a flow of the refrigerant in the bypass pipe, when the temperature of the coolant, measured after supplying the refrigerant to the bypass pipe, falls to or below a third reference temperature, by the processor (110).

10. The method of claim 9,
wherein the first reference temperature is less than or equal to the second reference temperature, and
wherein the third reference temperature is less than the first reference temperature.

11. Apparatus (100) for thermal management of a vehicle battery (201), the apparatus (100) comprising:
a battery cooling system (141) comprising a coolant pipe configured to circulate a coolant through the vehicle battery (201);
an air conditioning system (143) comprising a refrigerant pipe that is arranged so that a refrigerant can circulate therethrough to control air conditioning of the vehicle, and a bypass pipe that is arranged to selectively supply the refrigerant to the vehicle battery (201); and
a battery chiller (231) configured to perform heat exchange between the coolant pipe and the refrigerant pipe,
wherein the refrigerant comprises at least one selected from the group consisting of:
a natural refrigerant;
a hydrofluorocarbon (HFC)-based refrigerant;
a hydrofluoroolefin (HFO)-based refrigerant;
a hydrochlorofluorocarbon (HCFC)-based refrigerant;
a hydrocarbon-based refrigerant that is not a natural refrigerant; and
a halon or a perfluorocarbon (PFC)-based refrigerant.

12. The apparatus (100) of claim 11, wherein the natural refrigerant comprises at least one selected from the group consisting of:
methane (R-50), ammonia (R-717), carbon dioxide (R-744), ethane (R-170), and propane (R-290),
wherein the hydrofluorocarbon (HFC)-based refrigerant comprises at least one selected from the group consisting of:
difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc),
wherein the hydrofluoroolefin (HFO)-based refrigerant comprises at least one selected from the group consisting of:
1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye),
wherein the hydrochlorofluorocarbon (HCFC)-based refrigerant comprises at least one selected from the group consisting of:
chlorodifluoromethane (R-22), chlorotetrafluoroethane (R-124), and 1-chloro-1,1-difluoroethane (R-142b),
wherein the hydrocarbon-based refrigerant that is not a natural refrigerant comprises at least one selected from the group consisting of:
propylene (R-1270), isobutane (R-600a), dimethyl ether, isopentane, and pentane, and
wherein the halon or the perfluorocarbon (PFC)-based refrigerant comprises at least one selected from the group consisting of:
trifluoroiodomethane (R-13I1), octafluoropropane (R-218), and octafluorocyclobutane (RC318).

13. The apparatus (100) of claim 11 or 12, further comprising:
a processor (110) configured to:
receive, at a predetermined time interval, information on a temperature of the coolant after the coolant is heat-exchanged with the refrigerant measured via at least one temperature measuring sensor (S);
operate an electronic device for cooling (C) to perform cooling of the coolant when the temperature of the coolant exceeds a predetermined first reference temperature; and
supply the refrigerant to the bypass pipe when the temperature of the coolant, measured after performing cooling of the vehicle battery (201) based on the cooling of the coolant, exceeds a second reference temperature.

14. The apparatus (100) of claim 13,
wherein the processor (110) is further configured to:
stop operation of the electronic device for cooling (C), and shut off a flow of the refrigerant in the bypass pipe, when the temperature of the coolant, measured after supplying the refrigerant to the bypass pipe, falls to or below a third reference temperature.

15. The apparatus (100) of claim 14,
wherein the first reference temperature is configured to be less than or equal to the second reference temperature, and
wherein the third reference temperature is configured to be less than the first reference temperature.
